(19) Europäisches Patentamt / European Patent Office / Office européen des brevets

(11) **EP 3 229 502 B1**

(12) **EUROPEAN PATENT SPECIFICATION**

(45) Date of publication and mention of the grant of the patent:
**13.06.2018 Bulletin 2018/24**

(51) Int Cl.:
***H04W 4/04*** *(2009.01)*     ***H04W 4/06*** *(2009.01)*

(21) Application number: **16164306.9**

(22) Date of filing: **07.04.2016**

(54) **ACCESS POINT IN GEOGRAPHIC ROUTING SYSTEM AND CONTROLLING METHOD THEREOF**

ZUGANGSPUNKT IN GEOGRAFISCHEM LEITWEGLENKUNGSSYSTEM UND STEUERUNGSVERFAHREN DAFÜR

POINT D'ACCÈS DANS UN SYSTÈME D'ACHEMINEMENT GÉOGRAPHIQUE ET SON PROCÉDÉ DE COMMANDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.10.2017 Bulletin 2017/41**

(73) Proprietor: **Industrial Technology Research Institute**
**Chutung Hsinchu 31040 (TW)**

(72) Inventors:
• **Hsieh, Tien-Yuan**
  **320 Taoyuan City (TW)**
• **Kang, Po-Chun**
  **310 Hsinchu County (TW)**
• **Hsu, Chia-Chang**
  **324 Taoyuan City (TW)**
• **Hu, Lo-Chuan**
  **310 Hsinchu County (TW)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(56) References cited:
**US-A1- 2015 296 411**

• Y. BI ET AL: "A Directional Broadcast Protocol for Emergency Message Exchange in Inter-Vehicle Communications", 2009 IEEE INTERNATIONAL CONFERENCE ON COMMUNICATIONS, 1 June 2009 (2009-06-01), pages 1-5, XP055304043, DOI: 10.1109/ICC.2009.5198592
• Mr D Tamilselvan ET AL: "Mobility Prediction And Node Prediction Based Light-Weight Reliable Broadcast Message Delivery For Vehicular Ad-Hoc Networks", International Journal of Advanced Research in Computer and Communication Engineering, 1 January 2014 (2014-01-01), pages 2319-5940, XP055304358, Retrieved from the Internet: URL:http://www.ijarcce.com/upload/2014/january/IJARCCE9G___s___vasanthamala_Mobility .pdf [retrieved on 2016-09-21]

**Description**

TECHNICAL FIELD

BACKGROUND

The intelligent transportation system (ITS) is a system for monitoring and managing the transportation via the electronics, software, communication and controlling technology. The European Telecommunication Standards Institute (ETSI) defines some protocols, such as GeoNetworking Forwarding Algorithm, for the ITS.

In the geographic routing system, when a car moves through and detects an uneven area on a road, an on board unit (OBU) on the car will broadcast a traffic event packet to inform other cars to notice the uneven area. The OBU on this car will periodically broadcast the traffic event packets.

In lower traffic flow, when the OBU on this car broadcasts the traffic event packets, the traffic event packets may not be received by any other car because there is no car located in the transmitting range of the OBU. Further, this car will go away the uneven area and cannot be kept at the uneven area to broadcast the traffic event packets. Therefore, the efficiency of the traffic event diffusion is low and is needed to be improved.

Document US 2015296411 discloses a system with Vehicle-to-vehicle communication in an Intelligent Transport System (ITS). Receiving data by vehicle-to-vehicle (V2V) devices from a cellular network of a first radio technology, and setting control parameters of vehicle-to-vehicle communication by second radio technology by the V2V devices based on the data from the cellular network. The control parameters relate to rate, transmission power or transmission range for sending vehicle-to-vehicle communication message by second radio technology.

SUMMARY

The disclosure is directed to an access point in a geographic routing system and a controlling method thereof according to the independent claims. Further embodiments are defined by the dependent claims.

BRIEF DESCRIPTION OF THE DRAWINGS

FIG. 1 shows a block diagram of an access point in a geographic routing system.

FIG. 2 shows a block diagram of an on board unit (OBU) on a car in the geographic routing system.

FIG. 3A to 3B illustrate a controlling method in the geographic routing system according to one embodiment.

FIGS. 4A to 4B illustrate a controlling method in the geographic routing system according to one embodiment.

FIG. 5A to 5B illustrate a controlling method in the geographic routing system according to one embodiment.

FIGS. 6A to 6B illustrate a controlling method in the geographic routing system according to one embodiment.

FIGS. 7A to 7B show a flow chart of a controlling method of the access point in the geographic routing system according to one embodiment.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

DETAILED DESCRIPTION

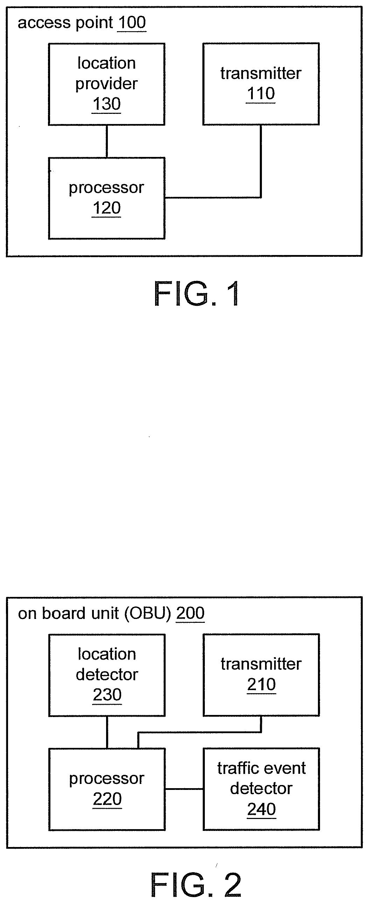

Please refer to FIGS. 1 to 2. FIG. 1 shows a block diagram of an access point 100 in a geographic routing system. FIG. 2 shows a block diagram of an on board unit (OBU) 200 on a car in the geographic routing system. Referring to FIG. 1, the access point 100 includes a transmitter 110, a processor 120 and a location provider 130. The transmitter 110 is used for transmitting signals. For example, the transmitter 110 can be a wireless transmitting module or a communication line. The processor 120 is used for performing an analyzing procedure, a calculating procedure or a controlling procedure. For example, the processor 120 can be a chip, a circuit board or a computer. The location provider 130 is used for providing a location of the access point 100. Because the access point 100 is disposed on a fixed stand and will not move, the location is fixed and can be previously recorded. For example, the location provider 130 can be a storage device, such as a hard disk, a memory or a memory card. Or, the location provider 130 can be a GPS information receiver.

Referring to FIG. 2, the OBU 200 includes a transmitter 210, a processor 220, a location detector 230 and a traffic event detector 240. The transmitter 210 is used for transmitting signals. For example, the transmitter 210 can be a wireless transmitting module. The processor 220 is used for performing an analyzing procedure, a calculating procedure or a controlling procedure. For example, the processor 220 can be a chip, a circuit board, a computer or a smart phone. The location detector 230 is used for detecting a position of the OBU 200. The location detector 230 can be a GPS information receiver. The traffic event detector 240 is used for detecting a traffic event. The traffic event detector 240 can be a vibration detector, and the traffic event is detected according to a vibration of the car.

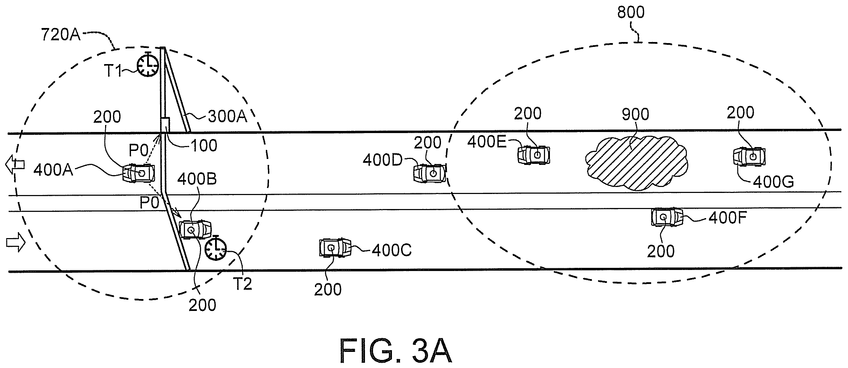

Please refer to FIG. 3A to 3B, which illustrate a controlling method in the geographic routing system according to one embodiment. Referring to FIG. 3A, one access point 100 is fixed on a stand 300A, and seven OBUs 200 are disposed on cars 400A to 400G respectively. After the OBU 200 on the car 400A moved through and detected an uneven area 900, the OBU 200 on the car 400A periodically broadcasts a traffic event packet P0.

Referring to FIG. 3A, the access point 100 on the stand 300A and the OBU 200 on the car 400B are located in a transmitting range 720A of the OBU 200 on the car 400A. The access point 100 on the stand 300A and the OBU 200 on the car 400B receive the traffic event packet P0. The access point 100 on the stand 300A sets a back-off timer T1 and the OBU 200 on the car 400B sets a back-off timer T2. In the embodiment of FIGS. 3A to 3B, a second back-off time value of the back-off timer T2 is less than a first back-off time value of the back-off timer T1, because the car 400B is closer to a destination area 800 than the stand 300A.

For example, the back-off timer can be set according to the following equation (1). $Def_{Min}$ is a predetermined minimum time value, and $Def_{Max}$ is a predetermined maximum time value. Distance(A,B) is a function for calculating a distance between A and B. $Fwd$ is the node to be broadcasted, such as the access point 100 on the stand 300A and the OBU 200 on the car 400B. $Dst$ is the center of the destination area 800. $Src$ is the node that first broadcasts the traffic event packet, such as the OBU 200 on the car 400A. According to the equation (1), the car 400B is closer to the destination area 800 than the stand 300A, so the second back-off time value of the back-off timer T2 is less than the first back-off time value of the back-off timer T1.

$$Timer = \begin{cases} Def_{Min} + \dfrac{Def_{Max} - Def_{Min}}{Def_{Max}} \times Distance(Fwd, Dst), & \text{if } Distance(Fwd, Dst) < Distance(Src, Dst) \\ Def_{Max}, & \text{if } Distance(Fwd, Dst) > Distance(Src, Dst) \end{cases} \quad (1)$$

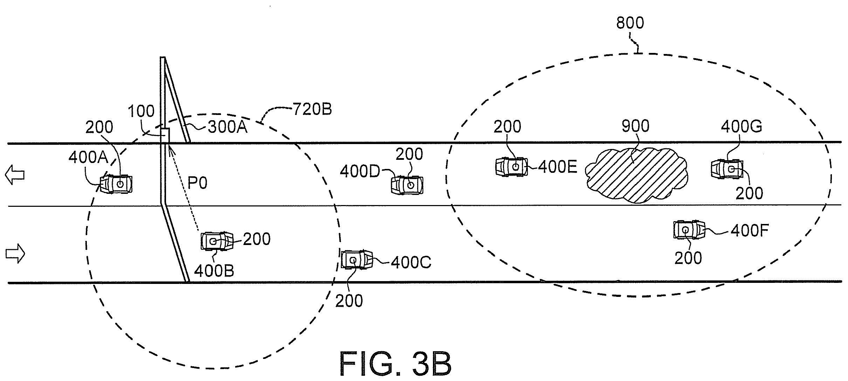

Referring to FIG. 3B, the traffic event packet P0 will be broadcasted again if the back-off timer T1 or T2 is counted down to be zero. Because the second back-off time value of the back-off timer T2 is less than the first back-off time value of the back-off timer T1, the OBU 200 on the car 400B will broadcast the traffic event packet P0 first. The traffic event packet P0 will be sent to the access point 100 on the stand 300A which is located within a transmitting range 720B of the OBU 200 on the car 400B.

When the access point 100 on the stand 300A receives the traffic event P0 secondly, the back-off timer T1 will be frozen and thrown. Hence, the access point 100 on the stand 300A will not broadcast the traffic event packet P0, again.

However, because the OBU 200 on the car 400C is not located within the transmitting range 720B of the OBU 200 on the car 400B, the traffic event packet P0 cannot be sent to the OBU 200 on the car 400C. Therefore, in the embodiment in FIGS. 3A and 3B, the traffic even packet P0 cannot be kept delivering toward the destination area 800.

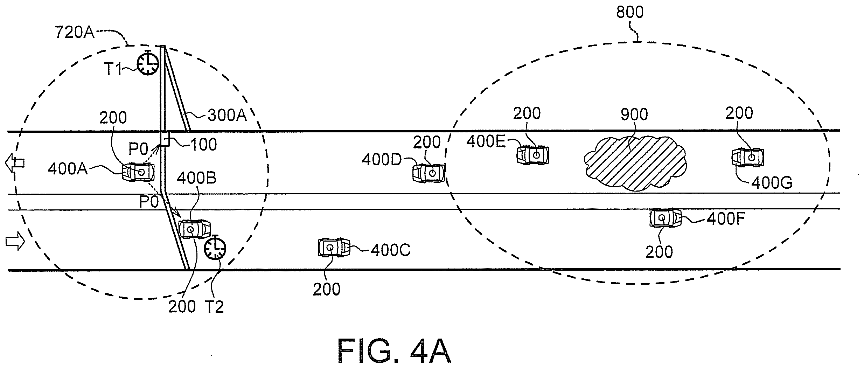

Please refer to FIGS. 4A to 4B, which illustrate a controlling method in the geographic routing system according to one embodiment. Referring to FIG. 4A, after the OBU 200 on the car 400A moved through and detected the uneven area 900, the OBU 200 on the car 400A periodically broadcasts the traffic event packet P0.

Referring to FIG. 4A, the access point 100 on the stand 300A and the OBU 200 on the car 400B are located in the transmitting range 720A of the OBU 200 on the car 400A. The access point 100 on the stand 300A and the OBU 200 on the car 400B receive the traffic event packet P0. The access point 100 on the stand 300A sets the back-off timer T1 and the OBU 200 on the car 400B sets the back-off timer T2.

In this embodiment, the first back-off time value of the back-off timer T1 is set to be less than the second back-off time value of the back-off timer T2 of any OBU 200 which receives the traffic event packet P0. For example, according to the equation (2), the first back-off time value is the predetermined minimum time value, such as zero.

$$Timer = \begin{cases} \text{Def}_{\text{Min}} + \dfrac{\text{Def}_{\text{Max}} - \text{Def}_{\text{Min}}}{\text{Def}_{\text{Max}}} \times \text{Distance}(\text{Fwd}, \text{Dst}), & \text{if Distance}(\text{Fwd}, \text{Dst}) < \text{Distance}(\text{Src}, \text{Dst}) \\ \text{Def}_{\text{Max}}, & \text{if Distance}(\text{Fwd}, \text{Dst}) > \text{Distance}(\text{Src}, \text{Dst}) \\ \text{Drf}_{\text{Min}}, & \text{if} \quad Fwd \quad == \quad access \quad po\text{int} \end{cases} \quad (2)$$

That is to say, the access point 100 on the stand 300A will broadcast first, even if the stand 300A is farther to the destination area 800 than the car 400B. Thus, by setting the back-off timer of the access point 100 to be the first back-of time value which is lower than the second back-off time value of the OBU 200, the access point 100 has a high priority to broadcast the traffic event packet P0.

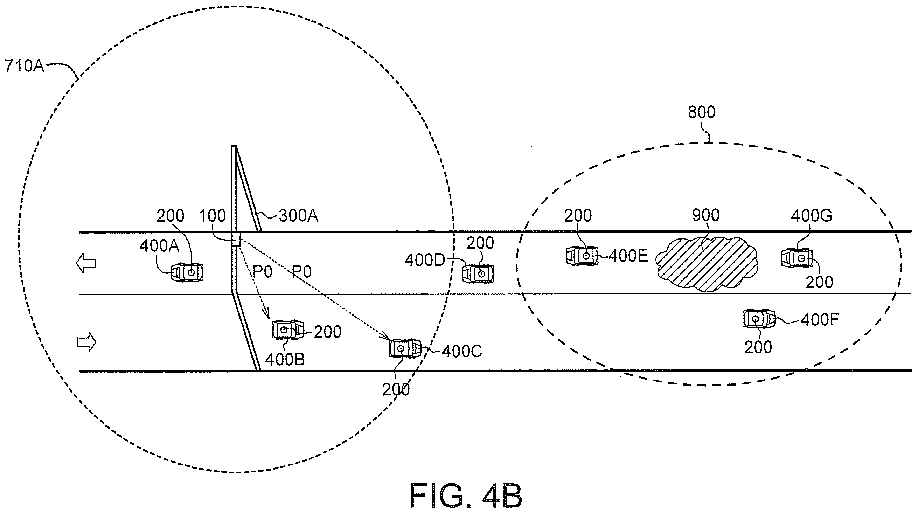

Further, the transmitting power of the access point 100 is set to be a first transmitting power value. The first transmitting power value is larger than a second transmitting power value of any OBU 200. For example, the first transmitting power value is a predetermined maximum power value. Referring to FIG. 4B, because the first transmitting power value is large, a transmitting range 710A may cover the OBU 200 on the car 400C. Therefore, the traffic event packet P0 can be sent to the OBU 200 on the car 400C and the traffic even packet P0 can be kept delivering toward the destination area 800.

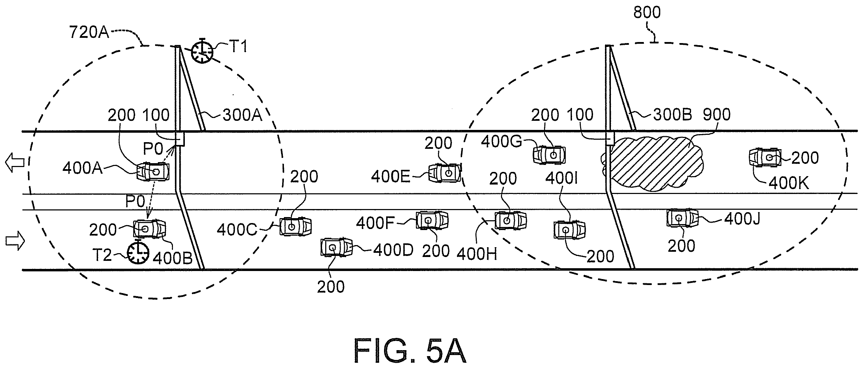

Further, please refer to FIG. 5A to 5B, which illustrate a controlling method in the geographic routing system according to one embodiment. Referring to FIG. 5A, after the OBU 200 on the car 400A moved through and detected the uneven area 900, the OBU 200 on the car 400A periodically broadcasts the traffic event packet P0.

Referring to FIG. 5A, the access point 100 on the stand 300A and the OBU 200 on the car 400B are located in the transmitting range 720A of the OBU 200 on the car 400A. The access point 100 on the stand 300A and the OBU 200 on the car 400B receive the traffic event packet P0. The access point 100 on the stand 300A sets the back-off timer T1 and the OBU 200 on the car 400B sets the back-off timer T2. In the embodiment of FIGS. 5A to 5B, because the stand 300A is closer to the destination area 800 than the car 400B, the first back-off time value of the back-off timer T1 is less than the second back-off time value of the back-off timer T2.

The traffic event packet P0 will be broadcasted again if the back-off timer T1 is counted down to be zero. The access point 100 on the stand 300A will broadcast the traffic event packet P0 to the OBU 200 on the car 400C.

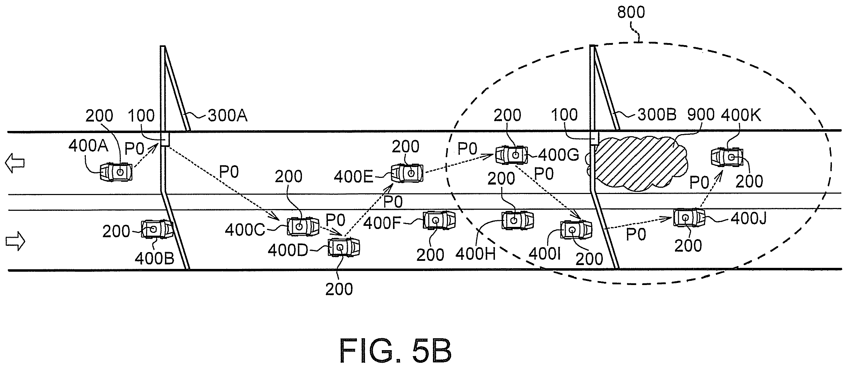

Referring to FIG. 5B, to inform the car 400K, the traffic event packet P0 may be transmitted toward the destination area 800 via the OBU 200 on the car 400A, the access point 100 on the stand 300A, the OBU 200 on the car 400C, the OBU 200 on the car 400D, the OBU 200 on the car 400E, the OBU 200 on the car 400G, the OBU 200 on the car 400I, the OBU 200 on the car 400J, and the OBU 200 on the car 400K sequentially.

In the embodiment of FIGS. 5A to 5B, a hot limit value is set to be a predetermined count value initially. The hop limit value is decreased by 1 when the traffic event packet P0 is transmitted one time. When the hop limit value is decreased to zero, then the traffic event packet P0 will be thrown away. Therefore, the number of transmitting times of the traffic event packet P0 can be limited within the predetermined count value.

However, for informing the uneven area 900 to the car 400K, the traffic event packet P0 is transmitted via several OBUs 200 on several cars. The transmission of the traffic event packet P0 spends a lot of time.

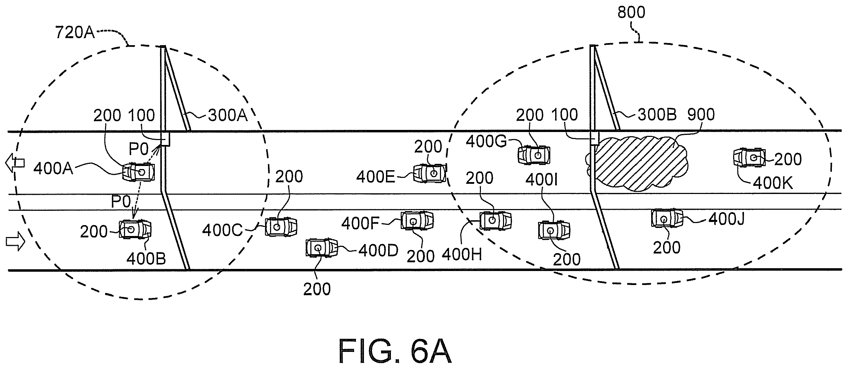

Please refer to FIGS. 6A to 6B, which illustrate a controlling method in the geographic routing system according to one embodiment. Referring to FIG. 6A, after the OBU 200 on the car 400A moved through and detected the uneven area 900, the OBU 200 on the car 400A periodically broadcasts the traffic event packet P0.

Referring to FIG. 6A, the access point 100 on the stand 300A and the OBU 200 on the car 400B are located in the transmitting range 720A of the OBU 200 on the car 400A. The access point 100 on the stand 300A and the OBU 200 on the car 400B receive the traffic event packet P0. The access point 100 on the stand 300A sets the back-off timer T1 and the OBU 200 on the car 400B sets the back-off timer T2.

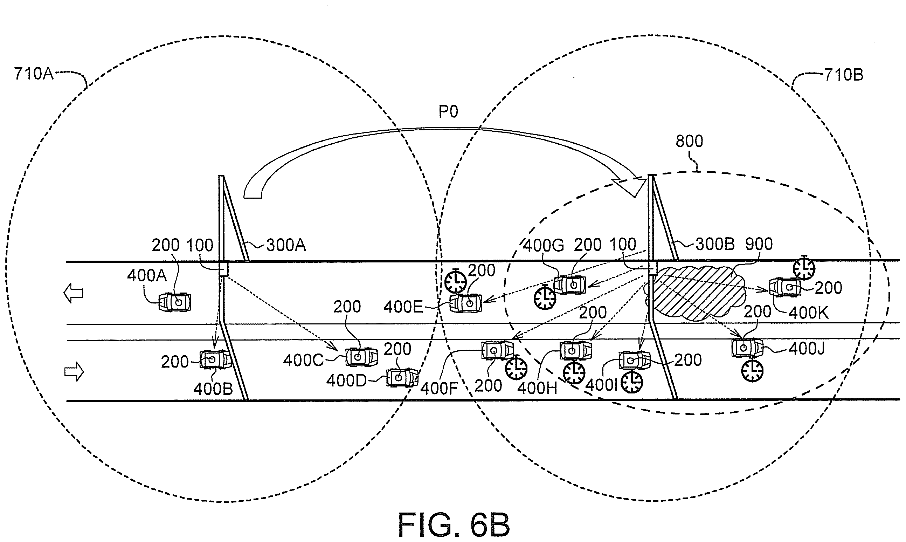

Referring to FIG. 6B, the access point 100 on the stand 300A finds that there is another access point 100 on the stand 300B which is closer to the destination area 800 than the access point 100 on the stand 300A. Then, the access point 100 on the stand 300A directly forwards the traffic event packet P0 to the access point 100 on the stand 300B. Therefore, the traffic event packet P0 can be sent to the OBUs 200 on the cars 400E to 400K which are close to the destination area 800. Therefore, to inform the car 400K, the traffic event packet P0 is transmitted via the OBU 200 on the car 400A, the access point 100 on the stand 300A, the access point 100 on the stand 300B and the OBU 200 on the car 400K sequentially. Thus, transmission of the traffic event packet P0 spends less time.

Furthermore, after the access point 100 on the stand 300A found the access point 100 on the stand 300B which is closer to the destination area 800, the traffic event packet P0 not only be forwarded to the access point 100 on the stand 300B, but also be broadcasted by the access point 100 on the stand 300A. In the embodiment of FIGS. 6A to 6B, when the traffic event packet P0 is broadcasted, the hop limit value is set to be a predetermined minimum count value, such as 1. Therefore, after the OBU 200 on the car 400B or the OBU 200 on the car 400C receives the traffic event packet P0, the hop limit value will be decreased to be zero, and the traffic event packet P0 will be thrown away. Therefore, the traffic event packet P0 will not be broadcast from the access point 100 on the stand 300A.

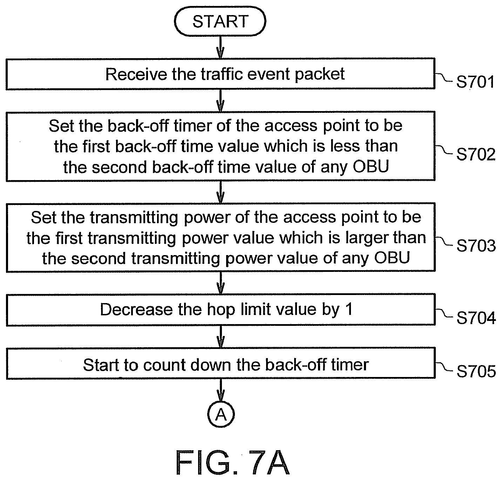

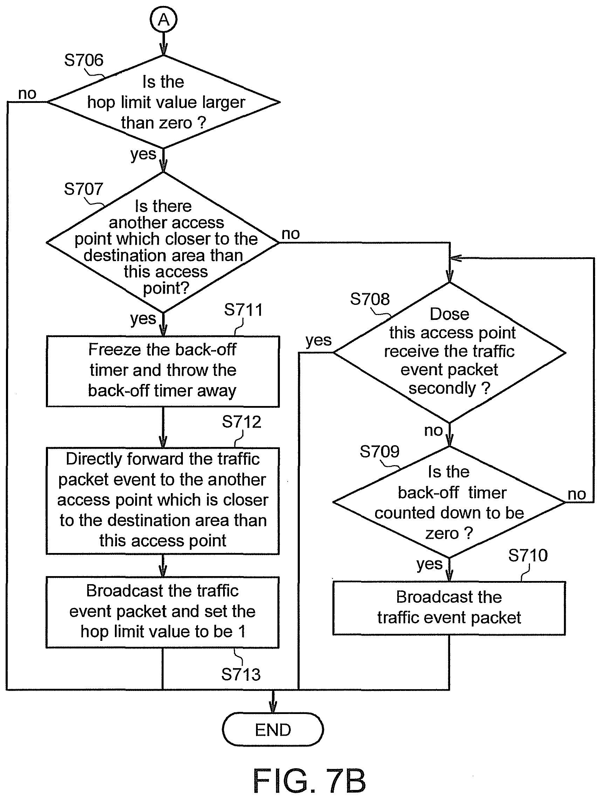

In the embodiments described above, the transmitting efficiency of the traffic event packet P0 can be improved by setting the back-off timer, setting the transmitting power, setting the hop limit value, or directly forwarding the traffic event packet P0 to another access point 100. Please refer to FIGS. 7A to 7B, which show a flow chart of a controlling method of the access point 100 in the geographic routing system according to one embodiment. This flowchart in FIGS. 7A to 7B is just one example to practice the designs described above. The sequence of those steps is not limited thereto. In some embodiment, the order of some steps can be changed, or some steps can be omitted. For illustrating the operation of the access point 100, the controlling method is illustrated by the access point 100 in FIG. 1.

In step S701, the transmitter 110 of the access point 100 receives the traffic event packet P0.

In step S702, the processor 120 of the access point 100 sets the back-off timer of the access point 100 to be the first back-off time value which is less than the second back-off time value of any OBU 200. Therefore, the priority of the access point 100 can be higher than the priority of the OBU 200.

In step S703, the processor 120 of the access point 100 sets the transmitting power of the access point 100 to be the first transmitting power value which is larger than the second transmitting power value of any OBU 200. Therefore, the transmitting range of the access point 100 can be enlarged for sending to more OBUs 200 (or more access points 100).

In step S704, the processor 120 of the access point decreases the hop limit value by 1. The hop limit value is used to limit the number of transmitting times of the traffic event packet P0.

In step S705, the processor 120 starts to count down the back-off timer.

In step S706, the processor 120 determines whether the hop limit value is larger than zero or not. If the hop limit value is larger than zero, then the process proceeds to step S707; if the hop limit value is not larger than zero, then the process is terminated.

In step S707, the processor 120 determines whether there is another access point 100 which is closer to the destination area 800 than this access point 100. If there is another access point 100 which is closer to the destination area 800 than this access point 100, then the process proceeds to step S711; if there is no access point 100 which is closer to the destination area 800 than this access point 100, then the process proceeds to step S708.

In step S708, the processor 120 of the access point 100 determines whether this access point 100 receives the traffic event packet P0 secondly or not. If this access point 100 receives the traffic event packet P0 secondly, then the process is terminated; if this access point 100 does not receive the traffic event packet P0 secondly, then the process proceeds to step S709.

In step S709, the processor 120 of the access point 100 determines whether the back-off timer is counted down to be zero. If the back-off timer is counted down to be zero, then the process proceeds to step S710; if the back-off timer is not counted down to be zero, then the process proceeds to step S708.

In step S710, the transmitter 110 of the access point 100 broadcasts the traffic event packet P0.

If there is another access point 100 which is closer to the destination area 800 than this access point 100, then the process proceeds to step S711.

In step S711, the processor 120 of the access point 100 freeze the back-off timer and throws the back-off timer away.

In step S712, the transmitter 110 of the access point 100 directly forwards the traffic packet event P0 to another access point 100 which is closer to the destination area 800 than this access point 100.

In step S713, the transmitter 110 of the access point 100 broadcasts the traffic event packet P0 and the processor 120 of the access point 100 set the hop limit value to be 1.

According to the embodiments described above, the transmitting efficiency of the traffic event packet P0 can be improved by setting the back-off timer, setting the transmitting power, setting the hop limit value, or directly forwarding the traffic event packet P0 to another access point 100.

It will be apparent to those skilled in the art that various modifications and variations can be made to the disclosed embodiments. It is intended that the specification and examples be considered as exemplary only, with a true scope of the disclosure being indicated by the following claims and their equivalents.

**Claims**

1. A controlling method of an access point (100) in a geographic routing system, **characterized in that** the controlling method of the access point (100) in the geographic routing system comprises:

   receiving a traffic event packet (P0) by the access point (100); and
   setting a back-off timer (T1) of the access point (100) to be a first back-off time value, wherein the first back-off time value is less than a second back-off time value of any on board unit (OBU) (200) which receives the traffic event packet (P0); and

broadcasting the traffic event packet (P0) by the access point (100) when the back-off timer (T1) is counted down to be zero.

2. The controlling method of the access point in the geographic routing system according to claim 1, wherein the first back-off time value is zero.

3. The controlling method of the access point in the geographic routing system according to claim 1, further comprising: setting a transmitting power of the access point to be a first transmitting power value, wherein the first transmitting power value is larger than a second transmitting power value of any OBU.

4. The controlling method of the access point in the geographic routing system according to claim 1, further comprising:

determining whether there is another access point which is closer to a destination area than the access point; and forwarding the traffic event packet to the another access point, if there is the another access point which is closer to the destination area than the access point.

5. The controlling method of the access point in the geographic routing system according to claim 4, further comprising: freezing the back-off timer and throw the back-off timer away, if there is the another access point which is closer to the destination area than the access point.

6. The controlling method of the access point in the geographic routing system according to claim 4, further comprising: broadcasting the traffic event packet to any on board unit (OBU) and setting a hop limit value to be 1, if there is the another access point which is closer to the destination area than the access point.

7. An access point (100) in a geographic routing system, **characterized in that** the access point (100) in the geographic routing system comprises:

a transmitter (110) for receiving a traffic event packet (P0); and a processor (120) setting a back-off timer (T1) of the access point (100) to be a first back-off time value, wherein the first back-off time value is less than a second back-off time value of any on board unit (OBU) (200) which receives the traffic event packet (P0) and the transmitter (110) transmits the traffic event packet (P0) when the back-off timer of the access point (100) is counted down to be zero.

8. The access point in the geographic routing system according to claim 7, wherein the first back-off time value is zero.

9. The access point in the geographic routing system according to claim 7, wherein the processor further sets a transmitting power of the access point to be a first transmitting power value, and the first transmitting power value is larger than a second transmitting power value of any OBU.

10. The access point in the geographic routing system according to claim 7,, further comprising:

a location provider for providing a location of the access point; wherein the processor is further for determining whether there is another access point which is closer to a destination area than the access point according to the location of the access point; the transmitter forwards the traffic event packet to the another access point, if there is the another access point which is closer to the destination area than the access point.

11. The access point in the geographic routing system according to claim 10, wherein the transmitter freeze the back-off timer and throw the back-off timer away, if there is the another access point which is closer to the destination area than the access point.

12. The access point in the geographic routing system according to claim 10, wherein the transmitter broadcasts the traffic event packet and the processor sets a hop limit value to be 1 if there is the another access point which is closer to the destination area than the access point.

**Patentansprüche**

1. Steuerungsverfahren für einen Zugangspunkt (100) in einem geographischen Routenführungssystem, **dadurch gekennzeichnet, dass** das Steuerungsverfahren für den Zugangspunkt (100) in dem geographischen Routenführungssystem die folgenden Schritte aufweist:

   Empfangen eines Verkehrsereignispakets (P0) durch den Zugangspunkt (100); und
   Einstellen eines Back-off-Timers (T1) des Zugangspunkts (100) auf einen ersten Back-off-Zeitwert, wobei der erste Back-off-Zeitwert geringer als ein zweiter Back-off-Zeitwert einer jeglichen On-Board-Unit (OBU) (200) ist, welche das Verkehrsereignispaket (P0) empfängt; und
   Senden des Verkehrsereignispakets (P0) durch den Zugangspunkt (100), wenn der Back-off-Timer (T1) bis Null heruntergezählt hat.

2. Steuerungsverfahren für einen Zugangspunkt in einem geographischen Routenführungssystem nach Anspruch 1, bei welchem der erste Back-off-Zeitwert Null ist.

3. Steuerungsverfahren für einen Zugangspunkt in einem geographischen Routenführungssystem nach Anspruch 1, ferner mit dem folgenden Schritt:
   Einstellen einer Sendeleistung des Zugangspunkts auf einen ersten Sendeleistungswert, wobei der erste Sendeleistungswert größer als ein zweiter Sendeleistungswert einer jeglichen OBU ist.

4. Steuerungsverfahren für einen Zugangspunkt in einem geographischen Routenführungssystem nach Anspruch 1, ferner mit den folgenden Schritten:

   Feststellen, ob ein anderer Zugangspunkt vorhanden ist, der einem Zielbereich näher ist als der Zugangspunkt; und
   Weiterleiten des Verkehrsereignispakets an den anderen Zugangspunkt, falls ein anderer Zugangspunkt vorhanden ist, der einem Zielbereich näher ist als der Zugangspunkt.

5. Steuerungsverfahren für einen Zugangspunkt in einem geographischen Routenführungssystem nach Anspruch 4, ferner mit dem folgenden Schritt:
   Anhalten des Back-off-Timers und Verwerfen des Back-off-Timers, wenn ein anderer Zugangspunkt vorhanden ist, der einem Zielbereich näher ist als der Zugangspunkt.

6. Steuerungsverfahren für einen Zugangspunkt in einem geographischen Routenführungssystem nach Anspruch 4, ferner mit dem folgenden Schritt:
   Senden des Verkehrsereignispakets an jegliche On-Board-Unit (OBU) und Einstellen eines Hop-Grenzwerts auf 1, wenn ein anderer Zugangspunkt vorhanden ist, der einem Zielbereich näher ist als der Zugangspunkt.

7. Zugangspunkt (100) in einem geographischen Routenführungssystem, **dadurch gekennzeichnet, dass** der Zugangspunkt (100) in dem geographischen Routenführungssystem aufweist:

   einen Sender (110) zum Empfangen eines Verkehrsereignispakets (P0);
   einen Prozessor (120), der einen Back-off-Timer (T1) des Zugangspunkts (100) auf einen ersten Back-off-Zeitwert einstellt, wobei der erste Back-off-Zeitwert geringer als ein zweiter Back-off-Zeitwert einer jeglichen On-Board-Unit (OBU) (200) ist, welche das Verkehrsereignispaket (P0) empfängt, und wobei der Sender (110) das Verkehrsereignispaket (P0) sendet, wenn der Back-off-Timer (T1) des Zugangspunkts (100) bis Null heruntergezählt hat.

8. Zugangspunkt in einem geographischen Routenführungssystem nach Anspruch 7, bei welchem der erste Back-off-Zeitwert Null ist.

9. Zugangspunkt in einem geographischen Routenführungssystem nach Anspruch 7, bei welchem der Prozessor ferner eine Sendeleistung des Zugangspunkts auf einen ersten Sendeleistungswert einstellt, und wobei der erste Sendeleistungswert größer als ein zweiter Sendeleistungswert einer jeglichen OBU ist.

10. Zugangspunkt in einem geographischen Routenführungssystem nach Anspruch 7, ferner mit:

einem Location-Provider zum Liefern einer Position des Zugangspunkts;
wobei der Prozessor ferner vorgesehen ist, um festzustellen, ob ein anderer Zugangspunkt vorhanden ist, der einem Zielbereich näher ist als der Zugangspunkt; wobei der Sender das Verkehrsereignispaket an den anderen Zugangspunkt weiterleitet, falls ein anderer Zugangspunkt vorhanden ist, der einem Zielbereich näher ist als der Zugangspunkt.

11. Zugangspunkt in einem geographischen Routenführungssystem nach Anspruch 10, bei welchem der Sender den Back-off-Timer anhält und den Back-off-Timer verwirft, wenn ein anderer Zugangspunkt vorhanden ist, der einem Zielbereich näher ist als der Zugangspunkt.

12. Zugangspunkt in einem geographischen Routenführungssystem nach Anspruch 10, bei welchem der Sender das Verkehrsereignispaket sendet und einen Hop-Grenzwert auf 1 einstellt, wenn ein anderer Zugangspunkt vorhanden ist, der einem Zielbereich näher ist als der Zugangspunkt.

**Revendications**

1. Procédé de commande d'un point d'accès (100) dans un système de routage géographique, **caractérisé en ce que** le procédé de commande du point d'accès (100) dans le système de routage géographique comprend :

   la réception d'un paquet d'évènement de trafic (P0) par le point d'accès (100) ; et
   le réglage d'un temporisateur de réduction de puissance (T1) du point d'accès (100) à une première valeur de temps de réduction de puissance, dans lequel la première valeur de temps de réduction de puissance est inférieure à une seconde valeur de temps de réduction de puissance de toute unité embarquée (OBU) (200) qui reçoit le paquet d'évènement de trafic (P0) ; et
   la radiodiffusion du paquet d'évènement de trafic (P0) par le point d'accès (100) lorsque le temporisateur de réduction de puissance (T1) est décompté à zéro.

2. Procédé de commande du point d'accès dans le système de routage géographique selon la revendication 1, dans lequel la première valeur de temps de réduction de puissance est zéro.

3. Procédé de commande du point d'accès dans le système de routage géographique selon la revendication 1, comprenant en outre :
   le réglage d'une puissance de transmission du point d'accès à une première valeur de puissance de transmission, dans lequel la première valeur de puissance de transmission est plus grande qu'une seconde valeur de puissance de transmission de toute OBU.

4. Procédé de commande du point d'accès dans le système de routage géographique selon la revendication 1, comprenant en outre :

   le fait de déterminer s'il y a un autre point d'accès qui est plus près d'une zone de destination que le point d'accès ; et
   le réacheminement du paquet d'évènement de trafic vers l'autre point d'accès, s'il y a l'autre point d'accès qui est plus près de la zone de destination que le point d'accès.

5. Procédé de commande du point d'accès dans le système de routage géographique selon la revendication 4, comprenant en outre :
   le gel du temporisateur de réduction de puissance et le rejet du temporisateur de réduction de puissance, s'il y a l'autre point d'accès qui est plus près de la zone de destination que le point d'accès.

6. Procédé de commande du point d'accès dans le système de routage géographique selon la revendication 4, comprenant en outre :
   la radiodiffusion du paquet d'évènement de trafic à toute unité embarquée (OBU) et le réglage d'une valeur de limite de saut à 1, s'il y a l'autre point d'accès qui est plus près de la zone de destination que le point d'accès.

7. Point d'accès (100) dans un système de routage géographique, **caractérisé en ce que** le point d'accès (100) dans le système de routage géographique comprend :

un transmetteur (110) pour recevoir un paquet d'évènement de trafic (P0) ; et
un processeur (120) réglant un temporisateur de réduction de puissance (T1) du point d'accès (100) à une première valeur de temps de réduction de puissance, dans lequel la première valeur de temps de réduction de puissance est inférieure à une seconde valeur de temps de réduction de puissance de toute unité embarquée (OBU) (200) qui reçoit le paquet d'évènement de trafic (P0) et le transmetteur (110) transmet le paquet d'évènement de trafic (P0) lorsque le temporisateur de réduction de puissance du point d'accès (100) est décompté à zéro.

8. Point d'accès dans le système de routage géographique selon la revendication 7, dans lequel la première valeur de temps de réduction de puissance est zéro.

9. Point d'accès dans le système de routage géographique selon la revendication 7, dans lequel le processeur règle en outre une puissance de transmission du point d'accès à une première valeur de puissance de transmission, et la première valeur de puissance de transmission est plus grande qu'une seconde valeur de puissance de transmission de toute OBU.

10. Point d'accès dans le système de routage géographique selon la revendication 7, comprenant en outre :

un fournisseur de localisation pour fournir une localisation du point d'accès ;
dans lequel le processeur est en outre apte à déterminer s'il y a un autre point d'accès qui est plus près d'une zone de destination que le point d'accès selon la localisation du point d'accès ; le transmetteur réachemine le paquet d'évènement de trafic à l'autre point d'accès, s'il y a l'autre point d'accès qui est plus près de la zone de destination que le point d'accès.

11. Point d'accès dans le système de routage géographique selon la revendication 10, dans lequel le transmetteur gèle le temporisateur de réduction de puissance et rejette le temporisateur de réduction de puissance, s'il y a l'autre point d'accès qui est plus près de la zone de destination que le point d'accès.

12. Point d'accès dans le système de routage géographique selon la revendication 10, dans lequel le transmetteur radiodiffuse le paquet d'évènement de trafic et le processeur règle une valeur de limite de saut à 1 s'il y a l'autre point d'accès qui est plus près de la zone de destination que le point d'accès.

access point 100

location
provider
130

transmitter
110

processor
120

# FIG. 1

on board unit (OBU) 200

location
detector
230

transmitter
210

processor
220

traffic event
detector
240

# FIG. 2

FIG. 3A

FIG. 3B

FIG. 4A

FIG. 4B

EP 3 229 502 B1

FIG. 5A

FIG. 5B

FIG. 6A

FIG. 6B

START

Receive the traffic event packet ⌐S701

Set the back-off timer of the access point to be
the first back-off time value which is less than
the second back-off time value of any OBU ⌐S702

Set the transmitting power of the access point to be
the first transmitting power value which is larger than
the second transmitting power value of any OBU ⌐S703

Decrease the hop limit value by 1 ⌐S704

Start to count down the back-off timer ⌐S705

Ⓐ

FIG. 7A

FIG. 7B

**EP 3 229 502 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015296411 A